# EUROPEAN PATENT APPLICATION

(11) **EP 4 583 181 A1**
(43) Date of publication of application: **09.07.2025**
(21) Application number: 23860118.1
(22) Date of filing: 21.08.2023
(51) Int. Cl.: H01M 4/13, H01G 11/24, H01G 11/42, H01G 11/86, H01M 4/36

(54) **COMPOSITE PARTICLES AND PRODUCTION METHOD FOR SAME, ELECTROCHEMICAL ELEMENT ELECTRODE, AND ELECTROCHEMICAL ELEMENT**

(30) Priority: 31.08.2022 JP 2022138703
(71) Applicant: Zeon Corporation, Tokyo 100-8246 (JP)
(72) Inventor: MATSUZAKI, Ikuma, Tokyo 100-8246 (JP); OTA, Keisuke, Tokyo 100-8246 (JP)
(74) Representative: Maiwald GmbH
(86) International application number: PCT/JP2023/030042
(87) International publication number: WO 2024/048355

(57) **Abstract**

Composite particles contain an active material having a conductive material-containing coating layer. A conductive material forming the conductive material-containing coating layer includes a fibrous conductive material. A value of a ratio E2/E1 of convexity E2 of the active material having the conductive material-containing coating layer relative to convexity E1 of the active material itself is 0.9999 or less.

## Description

### TECHNICAL FIELD

The present disclosure relates to composite particles and a method of producing the same, an electrode for an electrochemical device, and an electrochemical device.

### BACKGROUND

Electrochemical devices such as lithium ion secondary batteries have characteristics such as compact size, light weight, high energy density, and the ability to be repeatedly charged and discharged, and are used in a wide variety of applications.

Various improvements are being made to materials used to form electrodes for electrochemical devices with the aim of improving electrochemical device performance. An electrode for an electrochemical device has a structure in which an electrode mixed material layer is disposed on an electrode substrate. The electrode mixed material layer contains an electrode active material as a main component and may contain other components such as a conductive material and a binder as necessary in order to impart characteristic functions such as electrical conductivity, close adherence, and flexibility to the electrode.

Among materials used to form electrodes for electrochemical devices that have been the subject of various previous improvements, electrode active materials have been the subject of attempts to use particles that are surface coated with a carbon material (for example, refer to Patent Literature (PTL) 1 to 3). As one specific example, PTL 1 discloses a composite particle including a ceramic particle that is formed of a ceramic material functioning as an electrode active material and a carbon layer that is formed on the surface of the ceramic particle. The carbon layer included in this composite particle has an amorphous portion of amorphous carbon and particle-like graphite portions that are dotted in the amorphous portion. As another example, PTL 2 discloses a composite particle in which a lithium-containing phosphate particle is coated with a carbon film containing one or more carbon materials selected from the group consisting of (i) a fibrous carbon material, (ii) a chain-like carbon material, and (iii) a carbon material in which a fibrous carbon material and a chain-like carbon material are linked. As yet another example, PTL 3 discloses a technique for reducing internal resistance of a positive electrode by adopting a film formation technique to form a conductive film containing carbon, etc. at the surface of a positive electrode material particle.

### CITATION LIST

### Patent Literature

PTL 1: JP2009-099287A
PTL 2: WO2013/073562A1
PTL 3: JP2000-058063A

### SUMMARY

### (Technical Problem)

However, there is room for further improvement of conventional composite particles in terms of electrical resistance.

Accordingly, one object of the present disclosure is to provide composite particles having sufficiently low electrical resistance and a method of producing these composite particles.

Another object of the present disclosure is to provide an electrode for an electrochemical device containing the aforementioned composite particles and an electrochemical device including this electrode for an electrochemical device.

### (Solution to Problem)

The inventors conducted diligent investigation with the aim of solving the problem set forth above. The inventors made a new discovery that composite particles having sufficiently low electrical resistance can be obtained by forming a coating layer containing a fibrous conductive material on at least part of the surface of an active material to obtain a state in which a specific parameter relating to surface shape of the active material is satisfied and then causing particles of the coating layer-equipped active material that is obtained to combine to form composite particles. In this manner, the inventors completed the present disclosure.

Specifically, with the aim of advantageously solving the problem set forth above, [1] presently disclosed composite particles comprise an active material having a conductive material-containing coating layer, wherein the conductive material includes a fibrous conductive material, and a value of a ratio E2/E1 of convexity E2 of the active material having the conductive material-containing coating layer relative to convexity E1 of the active material itself is 0.9999 or less. Composite particles that satisfy such attributes have sufficiently low electrical resistance.

The term "convexity" refers to a value (perimeter convexity) obtained by dividing the convex hull perimeter by the actual perimeter, and, more specifically, can be measured by a method described in the EXAMPLES section of the present specification. Moreover, the value of the ratio E2/E1, which is a ratio of the convexity E2 of an active material having a conductive material-containing coating layer relative to the convexity E1 of the active material itself, can be calculated by a method described in the EXAMPLES section of the present specification.

[2] In the composite particles according to the foregoing [1], a value of a ratio S2/S1 of BET specific surface area S2 of the active material having the conductive material-containing coating layer relative to BET specific surface area S1 of the active material itself is preferably 1.5 or more. Composite particles that satisfy the condition set forth above have even lower electrical resistance.

The "BET specific surface area" referred to here is the nitrogen adsorption specific surface area measured by the BET method, and, more specifically, can be measured by a method described in the EXAMPLES section of the present specification. Moreover, the value of the ratio S2/S1, which is a ratio of the BET specific surface area S2 of an active material having a conductive material-containing coating layer relative to the BET specific surface area S1 of the active material itself, can be calculated by a method described in the EXAMPLES section of the present specification.
[3] Moreover, with the aim of advantageously solving the problem set forth above, a presently disclosed method of producing composite particles is a method of producing composite particles that contain an active material having a conductive material-containing coating layer, comprising: performing coating layer formation by stirring and mixing a fibrous conductive material and an active material having a convexity value of E1 to form an active material having a conductive material-containing coating layer; and performing stirring granulation by causing a plurality of particles of the active material having the conductive material-containing coating layer to combine while in a stirred state to form composite particles, wherein the coating layer formation is performed such that when convexity of the active material having the conductive material-containing coating layer is taken to be E2, a value of a ratio E2/E1 is 0.9999 or less. The presently disclosed method of producing composite particles set forth above enables efficient production of the presently disclosed composite particles having sufficiently low electrical resistance.
[4] In the production method according to the foregoing [3], the coating layer formation is preferably performed such that a value of a ratio S2/S1 of BET specific surface area S2 of the active material having the conductive material-containing coating layer relative to BET specific surface area S1 of the active material itself is 1.5 or more. The presently disclosed method of producing composite particles set forth above enables efficient production of composite particles having even lower electrical resistance.
[5] Furthermore, with the aim of advantageously solving the problem set forth above, a presently disclosed electrode for an electrochemical device comprises an electrode mixed material layer containing the composite particles for an electrochemical device according to the foregoing [1] or [2].
[6] Also, with the aim of advantageously solving the problem set forth above, a presently disclosed electrochemical device comprises the electrode for an electrochemical device according to the foregoing [5].

### (Advantageous Effect)

According to the present disclosure, it is possible to provide composite particles having sufficiently low electrical resistance and a method of producing these composite particles.

Moreover, according to the present disclosure, it is possible to provide an electrode for an electrochemical device containing the aforementioned composite particles and an electrochemical device including this electrode for an electrochemical device.

### DETAILED DESCRIPTION

The following provides a detailed description of embodiments of the present disclosure.

The presently disclosed composite particles can advantageously be used as a component compounded in an electrode mixed material layer that is included in an electrode of an electrochemical device such as a secondary battery. Moreover, the presently disclosed method of producing composite particles enables efficient production of the presently disclosed composite particles.

### (Composite particles)

The presently disclosed composite particles contain an active material having a conductive material-containing coating layer. More specifically, the composite particles are aggregates of the active material. Moreover, the conductive material includes a fibrous conductive material. Furthermore, a feature of the composite particles is that a value of a ratio E2/E1 of convexity E2 of the active material having the conductive material-containing coating layer relative to convexity E1 of the active material itself is 0.9999 or less. The composite particles containing an active material that has a conductive material-containing coating layer and that has a surface shape satisfying a specific parameter in this manner have sufficiently low electrical resistance. When the value of the ratio E2/E1 is not more than the upper limit set forth above, this means that some of the conductive material forming the conductive material-containing coating layer is attached to the surface in a protruding manner. It is presumed that the conductive material that is attached in a protruding manner as described above can sufficiently reduce electrical resistance of the composite particles through formation of a good electrical conduction network in the composite particles.

### <Active material>

A known electrode active material can be used without any specific limitations as the active material (positive electrode active material or negative electrode active material) that is a constituent of the active material having a conductive material-containing coating layer.

Examples of positive electrode active materials that may be used include, but are not specifically limited to, known positive electrode active materials such as lithium-containing cobalt oxide (lithium cobalt oxide, LiCoO₂), lithium manganate (LiMn₂O₄), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a Li₂MnO₃-LiNiO₂-based solid solution, a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄. Examples of negative electrode active materials that may be used include carbon-based negative electrode active materials, metal-based negative electrode active materials, and negative electrode active materials that are a combination thereof.

The particle diameter of the electrode active material is preferably 0.03 µm or more, more preferably 0.1 µm or more, and even more preferably 0.5 µm or more, and is preferably 500 µm or less, more preferably 200 µm or less, and even more preferably 30 µm or less. The particle diameter of the electrode active material can be measured by laser diffraction. More specifically, it is preferable that the particle diameter D50 at which cumulative volume calculated from a small diameter end of a particle diameter distribution (by volume) measured using a laser diffraction particle size analyzer reaches 50% is taken to be the volume-average particle diameter and that this value satisfies any of the particle diameter ranges set forth above.

### <Conductive material>

The conductive material that is a constituent of the conductive material-containing coating layer coating at least part of the above-described active material includes a fibrous conductive material. The fibrous conductive material may be single-walled or multi-walled carbon nanotubes, vapor-grown carbon fiber, carbon fiber obtained through carbonization of organic fiber, or a chopped product of any thereof. One of these fibrous conductive materials may be used individually, or two or more of these fibrous conductive materials may be used in combination. Of these examples, it is preferable that the fibrous conductive material includes single-walled or multi-walled carbon nanotubes. Moreover, from a viewpoint of forming a good electrical conduction network and even further reducing electrical resistance of the composite particles, it is more preferable that the fibrous conductive material includes multi-walled carbon nanotubes.

The average diameter of the fibrous conductive material that is included in the conductive material is preferably 3 nm or more, more preferably 10 nm or more, and even more preferably 20 nm or more, and is preferably 200 nm or less, more preferably 100 nm or less, and even more preferably 70 nm or less. When the average diameter of the fibrous conductive material is not less than any of the lower limits set forth above, this makes it easier for some of the conductive material to attach to the surface in a protruding manner and enables formation of an even better electrical conduction network. Moreover, when the average diameter of the fibrous conductive material is not more than any of the upper limits set forth above, a good electrical conduction network can be formed without excessively increasing the amount of the conductive material.

The average length of the fibrous conductive material is preferably 1 µm or more, and is preferably 50 µm or less, and more preferably 25 µm or less. When the average length of the fibrous conductive material is within any of the specific ranges set forth above, a good electrical conduction network can be formed by the fibrous conductive material, and electrical resistance of the composite particles can be even further reduced.

Note that the "average diameter of the fibrous conductive material" and the "average length of the fibrous conductive material" can be determined by measuring the diameters (external diameters) and lengths of 100 randomly selected fibers of the fibrous conductive material using a transmission electron microscope.

A powdered conductive material such as carbon black (for example, acetylene black, Ketjenblack^{®} (Ketjenblack is a registered trademark in Japan, other countries, or both), or furnace black) can be used without any specific limitations as a conductive material other than the above-described fibrous conductive material. One of these other conductive materials can be used individually, or a plurality of these other conductive materials can be used in combination. Note that fibrous conductive materials and powdered conductive materials referred to in the present specification can be differentiated between based on the aspect ratio thereof. Specifically, a conductive material having an aspect ratio of 10 or more is referred to as a fibrous conductive material, whereas a conductive material having an aspect ratio of less than 10 is referred to as a powdered conductive material.

No specific limitations are placed on the content of the conductive material. For example, the content of the conductive material based on the total mass of the composite particles is preferably 0.5 mass% or more, and more preferably 1.0 mass% or more, and is preferably 5 mass% or less, and more preferably 3 mass% or less. When the content of the conductive material in the composite particles is within any of the ranges set forth above, the balance between increasing capacity of an obtained electrochemical device and reducing electrical resistance can be enhanced well.

### <Convexity>

A requirement of the composite particles is that a value of a ratio E2/E1 of convexity E2 of the active material having the conductive material-containing coating layer relative to convexity E1 of the active material itself is 0.9999 or less. The value of the ratio E2/E1 is preferably 0.9980 or less, and more preferably 0.9950 or less. The convexity is a value that is calculated by dividing the convex hull perimeter by the actual perimeter, and thus the value of the convexity is smaller when the subject surface shape has more irregularities. The value of the ratio E2/E1 being 0.9999 or less as described above means that the degree of irregularity of the surface shape of the active material having the conductive material-containing coating layer is larger than the degree of irregularity of the surface shape of the active material itself. In other words, this means that the conductive material-containing coating layer has a bumpy shape. A conductive material-containing coating layer that has a bumpy shape in this manner is presumed to enable good formation of an electrical conduction network in the composite particles, which are aggregates of a plurality of particles of the active material, because such conductive material-containing coating layers come into contact with one another in the composite particles. When the value of the ratio E2/E1 is not more than any of the upper limits set forth above in this manner, this enables good reduction of electrical resistance of the composite particles. Moreover, the lower limit for the ratio E2/E1 is not specifically limited but is preferably 0.1000 or more, and more preferably 0.7000 or more from a viewpoint of ease of production.

### <BET specific surface area ratio>

In the composite particles, a value of a ratio S2/S1 of BET specific surface area S2 of the active material having the conductive material-containing coating layer relative to BET specific surface area S1 of the active material itself is preferably 1.5 or more, more preferably 2.0 or more, and even more preferably 2.5 or more. When the BET specific surface area ratio is not less than any of the lower limits set forth above, a good electrical conduction network is formed through the fibrous conductive material in the composite particles, and electrical resistance can be even further reduced. Note that the upper limit for the value of the ratio S2/S1 is not specifically limited but is preferably 60.0 or less, more preferably 40.0 or less, and even more preferably 5.0 or less from a viewpoint of ease of production.

### <Other components>

The composite particles may contain a binder in addition to the active material and the conductive material described above. A conjugated diene polymer, an acrylic polymer, an aromatic vinyl block polymer, a fluoropolymer, a cellulosic polymer, a cycloolefinic polymer, or the like, for example, can be used as the binder without any specific limitations. One of these binders may be used individually, or two or more of these binders may be used in combination.

The conjugated diene polymer is a polymer that includes a conjugated diene monomer unit. Specific examples of the conjugated diene polymer include, but are not specifically limited to, a copolymer that includes an aromatic vinyl monomer unit and an aliphatic conjugated diene monomer unit (for example, a styrene-butadiene copolymer (SBR)), butadiene rubber (BR), acrylic rubber (NBR) (copolymer including an acrylonitrile unit and a butadiene unit), and hydrogenated products thereof. Note that when a polymer is said to "include a monomer unit", this means that "a polymer obtained using that monomer includes a structural unit derived from the monomer".

The acrylic polymer may be a polymer that includes a cross-linkable monomer unit, a (meth)acrylic acid ester monomer unit, and an acidic group-containing monomer unit, for example, but is not specifically limited thereto. The proportion constituted by the (meth)acrylic acid ester monomer unit in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. Note that in the present specification, "(meth)acryl" is used to indicate "acryl" or "methacryl".

The aromatic vinyl block polymer may be a block polymer that includes a block region formed of an aromatic vinyl monomer unit. The aromatic vinyl monomer may be styrene, styrene sulfonic acid or a salt thereof, α-methylstyrene, p-t-butylstyrene, butoxystyrene, vinyltoluene, chlorostyrene, or vinylnaphthalene, for example, of which, styrene is preferable. The aromatic vinyl block polymer is preferably a styrene-isoprene-styrene block copolymer, a styrene-butadiene-styrene copolymer, a hydrogenated product of either thereof, or the like.

The fluoropolymer is a polymer that includes a fluorine-containing monomer unit and that may further include a unit of a monomer that does not include fluorine (non-fluorine-containing monomer). The fluorine-containing monomer may be vinylidene fluoride, tetrafluoroethylene, hexafluoropropylene, trifluorovinyl chloride, vinyl fluoride, trifluoroethylene, trifluorochloroethylene, 2,3,3,3-tetrafluoropropene, a perfluoroalkyl vinyl ether, or the like, for example, but is not specifically limited thereto. The fluoropolymer may be polytetrafluoroethylene, polychlorotrifluoroethylene, polyvinylidene fluoride, polyvinyl fluoride, a perfluoroalkoxy fluororesin, a tetrafluoroethylene-hexafluoropropylene copolymer, an ethylene-tetrafluoroethylene copolymer, an ethylene-chlorotrifluoroethylene copolymer, a vinylidene fluoride-hexafluoropropylene copolymer, or the like, but is not specifically limited thereto.

The cellulosic polymer may be cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or the like, for example, but is not specifically limited thereto.

The cycloolefinic polymer may be a polymer (addition polymer or ring-opened polymer) synthesized using a cycloolefin compound as a monomer or a hydrogenated product thereof, or may be a hydrogenated product of a polymer obtained using an aromatic vinyl compound as a monomer, for example, but is not specifically limited thereto. Of these examples, a hydrogenated product of a ring-opened polymer obtained using a cycloolefin compound as a monomer and a hydrogenated product of a polymer obtained using an aromatic vinyl compound as a monomer are preferable due to the ease of adjusting the degree of swelling in electrolyte solution and glass-transition temperature to suitable magnitudes.

Examples of the cycloolefin compound include, but are not specifically limited to:
norbornenes that are unsubstituted or include an alkyl group such as norbornene, 5-methylnorbornene, 5-ethylnorbornene, 5-butylnorbornene, 5-hexylnorbornene, 5-decylnorbornene, 5-cyclohexylnorbornene, and 5-cyclopentylnorbornene;
norbornenes that include an alkenyl group such as 5-ethylidenenorbornene, 5-vinylnorbornene, 5-propenylnorbornene, 5-cyclohexenylnorbornene, and 5-cyclopentenylnorbornene;
norbornenes that include an aromatic ring such as 5-phenylnorbornene;
norbornenes that include an oxygen atom-containing polar group such as 5-methoxycarbonylnorbornene, 5-ethoxycarbonylnorbornene, 5-methyl-5-methoxycarbonylnorbornene, 5-methyl-5-ethoxycarbonylnorbornene, norbornenyl-2-methylpropionate, norbornenyl-2-methyl octanoate, 5-hydroxymethylnorbornene, 5,6-di(hydroxymethyl)norbornene, 5,5-di(hydroxymethyl)norbornene, 5-hydroxy-i-propylnorbornene, 5,6-dicarboxynorbornene, and 5-methoxycarbonyl-6-carboxynorbornene;
norbornenes that include a nitrogen atom-containing polar group such as 5-cyanonorbornene;
polycyclic norbornenes including three or more rings that do not include an aromatic ring structure such as dicyclopentadiene, methyldicyclopentadiene, and tricyclo[5.2.1.02,6]dec-8-ene;
polycyclic norbornenes including three or more rings that include an aromatic ring such as tetracyclo[9.2.1.02,10.03,8]tetradeca-3,5,7,12-tetraene (also referred to as 1,4-methano-1,4,4a,9a-tetrahydro-9H-fluorene) and tetracyclo[10.2.1.02,11.04,9]pentadeca-4,6,8,13-tetraene (also referred to as 1,4-methano-1,4,4a,9,9a,10-hexahydroanthracene);
tetracyclododecenes that are unsubstituted or include an alkyl group such as tetracyclododecene, 8-methyltetracyclododecene, 8-ethyltetracyclododecene, 8-cyclohexyltetracyclododecene, 8-cyclopentyltetracyclododecene, and 8-methoxycarbonyl-8-methyltetracyclo[4.4.0.12,5.17,10]-3-dodecene;
tetracyclododecenes that include a double bond outside of a ring such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene;
tetracyclododecenes that include an aromatic ring such as 8-phenyltetracyclododecene;
tetracyclododecenes that include an oxygen atom-containing substituent such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride;
tetracyclododecenes that include a nitrogen atom-containing substituent such as 8-cyanotetracyclododecene and tetracyclododecene-8,9-dicarboxylic acid imide;
tetracyclododecenes that include a halogen atom-containing substituent such as 8-chlorotetracyclododecene;
tetracyclododecenes that include a silicon atom-containing substituent such as 8-trimethoxysilyltetracyclododecene; and
hexacycloheptadecenes such as a Diels-Alder adduct of a tetracyclododecene such as described above and cyclopentadiene.

No specific limitations are placed on the content of the binder. For example, the content of the binder based on the total mass of the composite particles is preferably 0.5 mass% or more, and more preferably 0.8 mass% or more, and is preferably 5 mass% or less, and more preferably 3 mass% or less. When the content of the binder in the composite particles is within any of the ranges set forth above, electrical resistance of the composite particles can be effectively reduced.

### (Method of producing composite particles)

The presently disclosed method of producing composite particles is a method of producing composite particles that contain an active material having a conductive material-containing coating layer and includes: performing coating layer formation (coating layer formation step) by stirring and mixing a fibrous conductive material and an active material having a convexity value of E1 to form an active material having a conductive material-containing coating layer; and performing stirring granulation (stirring granulation step) by causing a plurality of particles of the active material having the conductive material-containing coating layer to combine while in a stirred state to form composite particles. A feature of the presently disclosed production method is that the coating layer formation step is performed such that when convexity of the active material having the conductive material-containing coating layer is taken to be E2, a value of a ratio E2/E1 is 0.9999 or less. The method of producing composite particles set forth above enables efficient production of the presently disclosed composite particles set forth above. Moreover, the method of producing composite particles may include a preliminary stirring step of further adding and mixing a conductive material with respect to the active material having a conductive material-containing coating layer that is performed between the coating layer formation step and the stirring granulation step. Note that an active material, a conductive material, and a binder that are used in the steps described in detail below can be any of those that were previously described. Moreover, the steps described in detail below can be performed inside of a stirring tank that includes a stirring member such as an agitator.

### <Coating layer formation step>

In the coating layer formation step, a fibrous conductive material and an active material having a convexity value of E1 are stirred and mixed to form an active material having a conductive material-containing coating layer. The fibrous conductive material can be dispersed in a solvent in advance and then be used in the form of a dispersion liquid. Any solvent such as cyclohexane, n-hexane, acetone, methyl ethyl ketone, ethyl acetate, tetrahydrofuran, methylene chloride, or chloroform can be used as the solvent without any specific limitations so long as the fibrous conductive material can be dispersed therein. Moreover, the dispersion liquid of the fibrous conductive material may optionally contain a binder.

The coating layer formation step may more specifically involve loading an active material into a stirring tank, placing the active material in a stirred state through rotation of an agitator, for example, and then continuously or intermittently loading a dispersion liquid of a fibrous conductive material into the stirring tank. The loading method is not specifically limited and may be dripping or spraying using a two-fluid nozzle or the like. Moreover, after all of the dispersion liquid of the fibrous conductive material has been loaded, the stirred state is ended by stopping rotation of the agitator, for example. Note that it is preferable that a portion of all conductive material is loaded in this step in a case in which a preliminary stirring step is performed as an optional step.

The active material having a conductive material-containing coating layer that is formed in the coating layer formation step has a convexity value of E2. Upon comparison with a value E1 of convexity of the active material itself before coating, a value of a ratio E2/E1 is 0.9999 or less. Note that preferred ranges for the value of the ratio E2/E1 are as previously described.

Moreover, the active material having a conductive material-containing coating layer that is formed in the coating layer formation step has a BET specific surface area value of S2. From a viewpoint of even further reducing electrical resistance, it is preferable that a value of a ratio S2/S1 of BET specific surface area S2 of the active material having a conductive material-containing coating layer relative to BET specific surface area S1 of the active material itself is set as 1.5 or more. Note that preferred ranges for the value of the ratio S2/S1 are as previously described.

### <Preliminary stirring step>

In the preliminary stirring step, a conductive material is further added and mixed with respect to the active material having a conductive material-containing coating layer that has been formed in the coating layer formation step. For example, in the preliminary stirring step, the conductive material may be added once the active material having a conductive material-containing coating layer has been placed in a stirred state through stirring or the active material having a conductive material-containing coating layer and the conductive material may be loaded into a stirring tank and then stirring thereof may be initiated. At an end point of the preliminary stirring step, it is preferable that a mixture inside of the stirring tank is in a dry state. Note that in a case in which the preliminary stirring step is not performed, a conductive material may be added to the active material having a conductive material-containing coating layer in the stirring granulation step.

### <Stirring granulation step>

In the stirring granulation step, a plurality of particles of the active material having a conductive material-containing coating layer are caused to combine while in a stirred state to form composite particles. Specifically, the stirring granulation step may involve adding a binder to the active material having a conductive material-containing coating layer and the conductive material while the active material and the conductive material are in a stirred state and causing a plurality of particles of the active material to combine in the binder to obtain composite particles. The binder can be used in the form of a dispersion liquid having the binder dissolved or dispersed in a solvent. Any solvent can be used as the solvent without any specific limitations so long as the previously described binder can be dissolved or dispersed therein. In particular, the solvent may be cyclohexane, n-hexane, acetone, methyl ethyl ketone, ethyl acetate, tetrahydrofuran, methylene chloride, chloroform, or the like. One of these solvents may be used individually, or two or more of these solvents may be used in combination in a freely selected ratio.

A particle adjustment step of stirring a powder material in the stirring tank to perform particle adjustment can optionally be performed after completion of the stirring granulation step.

### (Electrode for electrochemical device)

The presently disclosed electrode includes at least an electrode mixed material layer containing the electrochemical device composite particles set forth above. The electrode mixed material layer is disposed on at least one side of an electrode substrate. Moreover, the presently disclosed electrode has sufficiently low electrical resistance as a result of including an electrode mixed material layer that contains the presently disclosed composite particles. Furthermore, by using this electrode, it is possible to cause an electrochemical device to display excellent output characteristics. Note that although the presently disclosed electrode may be either of a positive electrode or a negative electrode, the presently disclosed electrode is particularly suitable as a positive electrode.

### <Electrode substrate>

The electrode substrate is a material having electrical conductivity and electrochemical durability. Specifically, a current collector made of iron, copper, aluminum, nickel, stainless steel, titanium, tantalum, gold, platinum, or the like can be used as the electrode substrate. Note that one of the above-described materials may be used individually, or two or more of the above-described materials may be used in combination in a freely selected ratio.

### <Production method of electrode for electrochemical device>

The electrode for an electrochemical device can be produced by performing pressure forming of the presently disclosed composite particles set forth above on the electrode substrate so as to form an electrode mixed material layer.

The pressure forming can be performed according to a known method. For example, the composite particles set forth above can be supplied to a roll press and be subjected to roll pressing on the electrode substrate so as to perform pressure forming of the composite particles on the electrode substrate and form an electrode mixed material layer. The pressure during pressing can be set as appropriate in accordance with the target electrode density.

### (Electrochemical device)

An electrochemical device that is formed using the presently disclosed electrode for an electrochemical device set forth above may be a lithium ion secondary battery, an electric double-layer capacitor, or a lithium ion capacitor, for example, without any specific limitations, and may preferably be a lithium ion secondary battery. The electrochemical device formed using the presently disclosed electrode for an electrochemical device has low internal resistance and excellent output characteristics.

Although the following describes, as one example, a case in which the electrochemical device is a lithium ion secondary battery, the present disclosure is not limited to the following example. A lithium ion secondary battery corresponding to the presently disclosed electrochemical device normally includes electrodes (positive electrode and negative electrode), an electrolyte solution, and a separator and has the presently disclosed electrode for an electrochemical device as at least one of the positive electrode and the negative electrode.

### <Electrodes>

Any known electrode can be used without any specific limitations as an electrode other than the presently disclosed electrode for an electrochemical device set forth above that can be used in the lithium ion secondary battery corresponding to the electrochemical device. Specifically, an electrode obtained by forming an electrode mixed material layer on a current collector by a known production method can be used as an electrode other than the electrode for an electrochemical device set forth above. Note that it is preferable that the electrochemical device includes the presently disclosed electrode for an electrochemical device set forth above as a positive electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₃SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. The concentration of the electrolyte in the electrolyte solution can be adjusted as appropriate. Known additives such as vinylene carbonate, fluoroethylene carbonate, and ethyl methyl sulfone may be added to the electrolyte solution.

### <Separator>

Any known separator can be used without any specific limitations as the separator. In particular, a microporous membrane formed of a polyolefinic (polyethylene, polypropylene, polybutene, or polyvinyl chloride) resin is preferable. Moreover, the separator may be a functional layer-equipped separator that includes a functional layer (porous membrane layer or adhesive layer) at one side or both sides of a separator substrate.

### <Production method of lithium ion secondary battery>

The lithium ion secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

Measurements and evaluations of various attributes in the examples and comparative examples were performed according to the following methods. Note that fibrous conductive materials used in the examples and comparative examples each had an aspect ratio of 10 or more and that powdered conductive materials used in the examples and comparative examples each had an aspect ratio of less than 10.

### <Value of perimeter convexity ratio E2/E1>

A Morphologi G3 produced by Malvern Panalytical was used to determine an average value of perimeter convexity by performing binarization processing and analysis of images of 10,000 particles of an active material used in each example or comparative example (active material having a conductive material-containing coating layer and active material before coating layer formation). Specifically, an average value of values determined by dividing the perimeter of a convex circumscribed figure (minimum convex hull) by the actual perimeter P for each of 10,000 active material particles taken as subjects was taken to be the average perimeter convexity. Values of average perimeter convexity E1 of the active material before coating layer formation (i.e., of the active material itself) and average perimeter convexity E2 of the active material having a conductive material-containing coating layer that were obtained in this manner were then used to calculate a value of a ratio E2/E1.

### <Value of BET specific surface area ratio S2/S1>

The BET specific surface area of each active material used in each example or comparative example (active material having a conductive material-containing coating layer and active material before coating layer formation) was determined by using a specific surface area and pore size distribution analyzer (BELSORP-mini II produced by MicrotracBEL Corp.) to measure a nitrogen gas adsorption isotherm at 77 K and perform analysis by the BET method. Pre-treatment was performed under conditions of 20 minutes at 150°C and reduced pressure. Measurement of BET specific surface area was performed with 5 g of each active material loaded into a sample tube. Values of BET specific surface area S1 of the active material before coating layer formation (i.e., of the active material itself) and BET specific surface area S2 of the active material having a conductive material-containing coating layer that were obtained in this manner were then used to calculate a value of a ratio S2/S1.

### <Electrical resistance of composite particles>

Using a powder resistance measurement system (MCP-PD51 produced by Daia Instruments), pressure was continuously applied to composite particles produced in each example or comparative example while measuring a resistance value, and the electrical resistivity ρ (Ω·cm) = R × (S/d) was calculated from the convergent resistance value R (Ω) with respect to pressure, the area S (cm²) of the compressed composite particle layer, and the thickness d (cm) of the compressed composite particle layer. Measurement results at a load of 20 kN in the examples and comparative examples were used to calculate a value of (example or comparative example)/(Comparative Example 1) for each example or comparative example based on the measurement result in Comparative Example 1, and electrical resistance was evaluated as a ratio of the resistance value in each example or comparative example based on the resistance value in Comparative Example 1. A smaller ratio obtained in this manner indicates lower electrical resistance.

### (Example 1)

### <Production of binder>

A reactor that included a stirring device and that had been thoroughly internally purged with nitrogen was charged with 270 parts of dehydrated cyclohexane and 0.53 parts of ethylene glycol dibutyl ether, and then 0.47 parts of n-butyllithium (15% cyclohexane solution) was further added thereto. All contents of the reactor were stirred at 60°C while 12.5 parts of dehydrated styrene was continuously added into the reactor over 40 minutes. Once this addition was complete, all contents of the reactor were further stirred in this state at 60°C for 20 minutes. The polymerization conversion rate at this point was determined to be 99.5% upon measurement of the reaction liquid by gas chromatography. Next, 75.0 parts of dehydrated isoprene was continuously added to the reaction liquid over 100 minutes, and stirring was continued in this state for 20 minutes after completion of the addition. The polymerization conversion rate at this point was 99.5%. Thereafter, a further 12.5 parts of dehydrated styrene was continuously added over 60 minutes, and stirring of all contents of the reactor was continued in this state for 30 minutes after completion of this addition. The polymerization conversion rate at this point was almost 100%.

At this point, 0.5 parts of isopropyl alcohol was added to the reaction liquid to stop the reaction. The resultant polymer solution was transferred to a pressure-resistant reactor including a stirring device, 7.0 parts of nickel catalyst supported on diatomaceous earth carrier (produced by JGC Catalysts and Chemicals Ltd.; product name: E22U; supported nickel content: 60%) as a hydrogenation catalyst and 80 parts of dehydrated cyclohexane were added thereto, and mixing was performed. The inside of the reactor was purged with hydrogen gas, and hydrogen was also supplied into the reactor while stirring the solution so as to perform a hydrogenation reaction at a temperature of 190°C and a pressure of 4.5 MPa for 6 hours.

Once the hydrogenation reaction was complete, the reaction solution was filtered to remove the hydrogenation catalyst, and then 1.0 parts of a xylene solution having 0.1 parts of pentaerythrityl tetrakis[3-(3,5-di-t-butyl-4-hydroxyphenyl)propionate] (produced by KOYO Chemical Research Center; product name: Songnox 1010) dissolved therein as a phenolic antioxidant was added to and dissolved in the filtrate. Cyclohexane was further added to produce a binder solution having a solid content concentration of 10 mass%.

### <Production of composite particles>

### <<Preparation step>>

First, specific amounts of an active material and a CNT (carbon nanotube) dispersion liquid (i.e., a fibrous conductive material dispersion liquid) were prepared. Specifically, NMC532 (average particle diameter: 6 µm) as a positive electrode active material for a lithium ion battery was prepared as an active material. In addition, multi-walled CNTs (average diameter: 50 nm; average length: 15 µm) were used as CNTs. Moreover, the binder prepared as described above was used to prepare a fibrous conductive material dispersion liquid by dispersing the multi-walled CNTs and the binder in cyclohexane such as to give a solid content concentration of 1.0 mass%. In this preparation, the ratio of the active material, the fibrous conductive material, and the binder was set as 97:1:0.1 by mass.

### <<Coating layer formation step>>

A composite particle production device including a circular tube shaped vessel having an internal diameter of 180 mm and an internal capacity of 2 L and including agitators at two axes in a vertical direction (axial direction of circular tube shaped vessel) and a horizontal direction inside of the circular tube shaped vessel was prepared as a stirring tank. (Note that the vertical direction corresponded to a main agitator and the horizontal direction corresponded to an auxiliary agitator.) The main agitator was an inclined paddle including three main blades of 170 mm in diameter, and the auxiliary agitator had a V-type anchor blade of 30 mm in diameter. The device also had a mechanism by which feedstock was prevented from entering driving parts of the main agitator and the auxiliary agitator through sealing by air ventilation. The device having this configuration was used to perform various steps to produce composite particles.

First, all of the active material that was prepared in the above-described step was loaded into the stirring tank, and the stirring tank was operated under conditions of a main agitator circumferential speed of 6 m/s and an auxiliary agitator circumferential speed of 5 m/s. The fibrous conductive material dispersion liquid prepared in the above-described step was added with respect to the active material in a stirred state from a two-fluid nozzle. The stirred state was continued until addition of the fibrous conductive material dispersion liquid was complete. After completion of the addition, the stirring was stopped, the resultant active material having a conductive material-containing coating layer was withdrawn from the stirring tank, and the perimeter convexity and BET specific surface area were measured as previously described.

### <<Preliminary stirring step>>

In a preliminary stirring step, all of the active material having a conductive material-containing coating layer that was formed in the coating layer formation step and 1 part of carbon black (BET specific surface area: 62 m²/g; bulk density: 0.16 g/cm³) as a powdered conductive material were loaded into the stirring tank. Next, ventilation with 20 L/min (ventilation rate: 10/min) of air for agitator sealing was performed, and 15 minutes of stirring was performed under operating conditions of a main agitator circumferential speed of 5 m/s and an auxiliary agitator circumferential speed of 6 m/s.

### <<Stirring granulation step>>

In a stirring granulation step, ventilation with 20 L/min (ventilation rate: 10/min) of air for agitator sealing was performed, and 0.9 parts by mass of solid content of the binder solution (solid content concentration: 10 mass%; viscosity: 200 mPa·s; solvent: cyclohexane) was continuously added over 15 minutes under operating conditions of a main agitator circumferential speed of 5 m/s and an auxiliary agitator circumferential speed of 6 m/s.

Next, ventilation with 20 L/min (ventilation rate: 10/min) of air for agitator sealing was performed, and operation was performed for 10 minutes under operating conditions of a main agitator circumferential speed of 2 m/s and an auxiliary agitator circumferential speed of 2 m/s. Evaluations were performed as previously described for the produced composite particles.

### (Example 2)

Composite particles were produced and electrical resistance was measured and evaluated in the same way as in Example 1 with the exception that stirring conditions in the coating layer formation step were changed such that the value of the perimeter convexity ratio E2/E1 and the value of the BET specific surface area ratio S2/S1 were as shown in Table 1. The results are shown in Table 1.

### (Example 3)

In the preliminary stirring step, the added conductive material was changed from carbon black (powdered conductive material) to 1 part in terms of solid content of a fibrous conductive material dispersion liquid (produced in the same way as the fibrous conductive material dispersion liquid prepared in the preparation step of Example 1). Note that the fibrous conductive material dispersion liquid was continuously added over the operating time of the agitators in the preliminary stirring step.

Moreover, the amount of the binder that was added in the stirring granulation step was adjusted such that the ratio of components contained in the resultant composite particles was as shown in Table 1.

With the exception of these points, composite particles were produced and electrical resistance was measured and evaluated in the same way as in Example 1. The results are shown in Table 1.

### (Example 4)

Composite particles were produced and electrical resistance was measured and evaluated in the same way as in Example 3 with the exception that stirring conditions in the coating layer formation step were changed such that the value of the perimeter convexity ratio E2/E1 and the value of the BET specific surface area ratio S2/S1 were as shown in Table 1. The results are shown in Table 1.

### (Comparative Example 1)

Carbon black (BET specific surface area: 62 m²/g; bulk density: 0.16 g/cm³) as a powdered conductive material was prepared instead of a fibrous conductive material in the preparation step, and the coating layer formation step was not performed. Mixing of 97 parts of an active material NMC532 (average particle diameter: 6 µm) that did not have a coating layer and 2 parts of the powdered conductive material was performed in the same way as in the preliminary stirring step of Example 1. Moreover, a stirring granulation step was performed to obtain composite particles and electrical resistance was measured and evaluated in the same way as in Example 1 with the exception that the amount of the binder compounded in the composite particles was adjusted to 1 part in terms of solid content. The results are shown in Table 1.

Note that since the composite particles used in this example did not have a coating layer, the value of the perimeter convexity ratio E2/E1 was taken to be 1.0000 and the value of the BET specific surface area ratio S2/S1 was taken to be 1.0.

### (Comparative Example 2)

Carbon black (BET specific surface area: 62 m²/g; bulk density: 0.16 g/cm³) as a powdered conductive material was prepared in addition to a fibrous conductive material in the preparation step, and the coating layer formation step was not performed. Mixing of 97 parts of an active material NMC532 (average particle diameter: 6 µm) that did not have a coating layer, 1 part of the powdered conductive material, and 1 part in terms of solid content of the fibrous conductive material dispersion liquid was performed in the same way as in the preliminary stirring step of Example 1. Note that the fibrous conductive material dispersion liquid was continuously added over the operating time of the agitators in the preliminary stirring step. Moreover, a stirring granulation step was performed to obtain composite particles and electrical resistance was measured and evaluated in the same way as in Example 1 with the exception that the amount of the binder compounded in the composite particles was adjusted to 1 part in terms of solid content. The results are shown in Table 1.

Note that since the composite particles used in this example did not have a coating layer in the same manner as in Comparative Example 1, the value of the perimeter convexity ratio E2/E1 was taken to be 1.0000 and the value of the BET specific surface area ratio S2/S1 was taken to be 1.0.

### (Comparative Example 3)

Carbon black (BET specific surface area: 62 m²/g; bulk density: 0.16 g/cm³) as a powdered conductive material was prepared instead of a fibrous conductive material in the preparation step, and composite particles were produced without compounding a fibrous conductive material.

In the coating layer formation step, addition of a conductive material via a two-fluid nozzle was not performed, but instead stirring was initiated under the same conditions as in Example 1 in a state in which 97 parts of the active material and 1 part of the powdered conductive material were charged to the stirring granulation device, and 0.1 parts of solid content of the binder solution (solid content concentration: 10 mass%; viscosity: 200 mPa·s; solvent: cyclohexane) was continuously added with respect to the active material and the powdered conductive material in the stirred state from a two-fluid nozzle.

In the preliminary stirring step, all of the active material having a powdered conductive material-containing coating layer that was obtained in the above-described step and 1 part of carbon black (BET specific surface area: 62 m²/g; bulk density: 0.16 g/cm³) as a powdered conductive material were loaded into the stirring tank. Moreover, stirring was performed under the same conditions as in Example 1.

Composite particles were then produced in the same way as in Example 1 with the exception that 0.9 parts of solid content of the binder solution (solid content concentration: 10 mass%; viscosity: 200 mPa·s; solvent: cyclohexane) was continuously added in the stirring granulation step. Electrical resistance was measured and evaluated in the same way as in Example 1 for the produced composite particles. The results are shown in Table 1.

**[Table 1]**

| | | Example 1 | Example 2 | Example 3 | Example 4 | Comparative Example 1 | Comparative Example 2 | Comparative Example 3 |
|---|---|---|---|---|---|---|---|---|
| Presence of fibrous conductive material-containing coating layer | | Yes | Yes | Yes | Yes | No | No | No |
| Form of coating layer conductive material | | Fibrous | Fibrous | Fibrous | Fibrous | None | None | Powdered |
| Form of subsequently added conductive material | | Powdered | Powdered | Fibrous | Fibrous | Powdered | Fibrous/ powdered | Powdered |
| Proportion (parts) | Active material | 97 | 97 | 97 | 97 | 97 | 97 | 97 |
| | Fibrous conductive material | 1 | 1 | 2 | 2 | 0 | 1 | 0 |
| | Powdered conductive material | 1 | 1 | 0 | 0 | 2 | 1 | 2 |
| | Binder | 1 | 1 | 1 | 1 | 1 | 1 | 1 |
| Specific surface area ratio S2/S1 [-] | | 1.6 | 2.9 | 1.6 | 2.9 | 1.0 | 1.0 | 5.3 |
| Perimeter convexity ratio E2/E1 [-] | | 0.9998 | 0.9933 | 0.9998 | 0.9933 | 1.0000 | 1.0000 | 1.0021 |
| Electrical resistance ratio of composite particles (based on Comparative Example 1) [-] | | 0.62 | 0.15 | 0.70 | 0.22 | 1.00 | 2.95 | 1.22 |

It can be seen from Table 1 that electrical resistance was sufficiently low with the composite particles according to Examples 1 to 4 for which the value of a ratio E2/E1 of convexity E2 of an active material having a conductive material-containing coating layer relative to convexity E1 of the active material itself was 0.9999 or less.

In contrast, it can be seen that electrical resistance was high with the composite particles according to Comparative Examples 1 to 3 that did not have a specific conductive material-containing coating layer.

### INDUSTRIAL APPLICABILITY

According to the present disclosure, it is possible to provide composite particles having sufficiently low electrical resistance and a method of producing these composite particles.

Moreover, according to the present disclosure, it is possible to provide an electrode for an electrochemical device containing the aforementioned composite particles and an electrochemical device including this electrode for an electrochemical device.

## Claims

1. Composite particles comprising an active material having a conductive material-containing coating layer, wherein
the conductive material includes a fibrous conductive material, and
a value of a ratio E2/E1 of convexity E2 of the active material having the conductive material-containing coating layer relative to convexity E1 of the active material itself is 0.9999 or less.

2. The composite particles according to claim 1, wherein a value of a ratio S2/S1 of BET specific surface area S2 of the active material having the conductive material-containing coating layer relative to BET specific surface area S1 of the active material itself is 1.5 or more.

3. A method of producing composite particles that contain an active material having a conductive material-containing coating layer, comprising:
performing coating layer formation by stirring and mixing a fibrous conductive material and an active material having a convexity value of E1 to form an active material having a conductive material-containing coating layer; and
performing stirring granulation by causing a plurality of particles of the active material having the conductive material-containing coating layer to combine while in a stirred state to form composite particles, wherein
the coating layer formation is performed such that when convexity of the active material having the conductive material-containing coating layer is taken to be E2, a value of a ratio E2/E1 is 0.9999 or less.

4. The method of producing composite particles according to claim 3, wherein the coating layer formation is performed such that a value of a ratio S2/S1 of BET specific surface area S2 of the active material having the conductive material-containing coating layer relative to BET specific surface area S1 of the active material itself is 1.5 or more.

5. An electrode for an electrochemical device comprising an electrode mixed material layer containing the composite particles according to claim 1 or 2.

6. An electrochemical device comprising the electrode for an electrochemical device according to claim 5.
